# EUROPÄISCHE PATENTSCHRIFT

(11) **EP 1 184 133 B1**
(45) Veröffentlichungstag und Bekanntmachung des Hinweises auf die Patenterteilung: **04.05.2005**
(21) Anmeldenummer: 01118949.5
(22) Anmeldetag: 04.08.2001
(51) Int. Cl.: B24B 39/00, B24B 39/04

(54) **Rollenkäfig**
Roller cage
Cage à rouleaux

(30) Priorität: 30.08.2000 DE 10042425
(43) Veröffentlichungstag der Anmeldung: 06.03.2002
(73) Patentinhaber: Hegenscheidt-MFD GmbH & Co. KG, 41812 Erkelenz (DE)
(72) Erfinder: Bagusche, Siegfried, Dipl.-Ing., 41812 Erkelenz (DE); Kalb, Herbert, 41836 Hückelhoven (DE); Risters, Frank, 41812 Erkelenz (DE); Zimmermann, Hans, 52538 Selfkant (DE)
(74) Vertreter: COHAUSZ & FLORACK

(56) Entgegenhaltungen:
- EP-A- 0 839 607
- US-A- 5 806 184

## Beschreibung

Die Erfindung betrifft einen Rollenkäfig gemäss dem Oberbegriff des Patentanspruchs. Der Rollenkäfig ist Teil eines Werkzeugs, das zum Festwalzen von Einstichen an Lager- oder Hubzapfen von Kurbelwellen vorgesehen ist. Ein derartiges Werkzeug ist beispielsweise bekannt aus der EP 0 839 607 A1. In dieser Schrift ist der Rollenkäfig mit der Bezugsziffer 15 versehen (vgl. Fig. 1) und wird am Ende eines L-förmigen Werkzeughalters, daselbst versehen mit der Bezugsziffer 20, geführt.

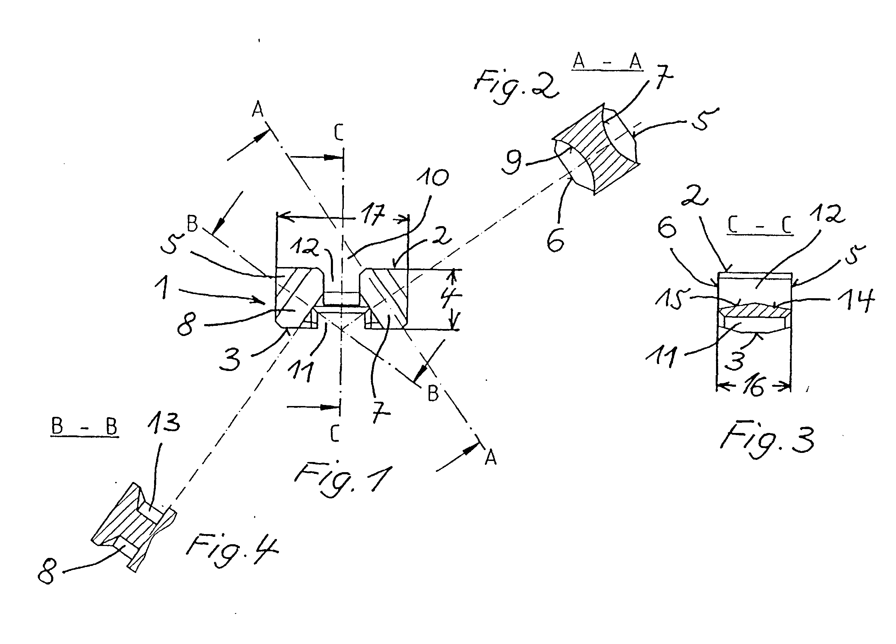

Die Festwalzrollen sind beispielsweise bekannt aus dem USA-Patent Nr. 5,806,184, siehe Oberbegriff des Anspruchs 1. Dort sind die Festwalzrollen jeweils mit der Bezugsziffer 40 versehen. Innerhalb der dort mit den Bezugsziffern 26 versehenen Rollenkäfige sind jeweils zwei Festwalzrollen 40 geführt, die zugleich unter einem Winkel 42 geneigt sind. Die Neigung 42 ist so gewählt, daß die innerhalb der Rollenkäfige 26 geführten Abschnitte der Festwalzrollen 40 einen geringeren Abstand zur Längsmitte des Festwalzwerkzeugs haben als jene Abschnitte der Festwalzrollen 40, die sich ausserhalb der Rollenkäfige befinden (vgl. USA-Patent Nr. 5,806,184, Fig. 2 und 2 a).

Die in der Patentschrift gezeigten Festwalzrollen mit der Bezugsziffer 40 haben annähernd natürliche Grösse. Dementsprechend hat die Baugrösse eines Rollenkäfigs auch nur geringe Abmessungen. Ihre Grundfläche ist beispielsweise nur 10 bis 30 mm breit und 10 bis 15 mm lang. Die Höhe des prismatischen Grundkörpers beträgt zwischen 8 und 15 mm. Diese Abmessungen gelten für ein Werkzeug, welches zum Bearbeiten der Kurbelwellen von Pkw-Motoren geeignet ist.

Die Festwalzrollen bestehen aus gehärtetem Stahl und dem gegenüber bestehen die Rollenkäfige aus Bronze, welche bei geringem Verschleiss besonders gute Gleiteigenschaften hat. Aber auch andere Werkstoffe kommen für einen Rollenkäfig in Betracht, wie z.B. Titan oder Keramik.

Dennoch sind die Rollenkäfige einem erhöhten Verschleiss ausgesetzt, so daß ihre Werkzeugstandzeiten relativ kurz sind. Mit fortschreitendem Verschleiss der Rollenkäfige verschleissen aber auch die Festwalzrollen. Diese Beanspruchung führt schliesslich dazu, daß Rollenkäfige und Festwalzrollen jeweils zugleich ausgewechselt werden müssen, wenn der Verschleiss des Rollenkäfigs allein eine bestimmte Grösse erreicht hat.

Daraus ergibt sich die Aufgabe für die vorliegende Erfindung, die Gebrauchsdauer eines Rollenkäfigs zu vergrössern, so daß unter Benutzung von ein und derselben Festwalzrolle die Standzeit des Festwalzwerkzeugs insgesamt erhöht werden kann.

Diese Aufgabe wird durch die Merkmale des Anspruchs 1 gelöst.

Nach dem Erreichen einer bestimmten Verschleisstiefe der ersten konkaven Ausnehmung zur Führung der Festwalzrolle wird der Rollenkäfig innerhalb des Werkzeugs umgedreht und die Festwalzrolle wird in der auf der rückseitigen Stirnseite des Rollenkäfigs vorgesehenen zweiten konkaven Ausnehmung weitergeführt, bis auch dort der zulässige Verschleiss erreicht ist. Das Ergebnis ist eine verbesserte Ausnutzung des Rollenkäfigs. Aufgrund seiner geringen Abmessungen, den geforderten Genauigkeiten und der vielfältigen maschinellen Bearbeitungen stellt an derartiger Rollenkäfig ein hochkompliziertes Bauteil des Werkzeugs dar, dessen Herstellung entsprechend teuer ist. Durch die erfindungsgemässe verbesserte Ausnutzung dieses Bauteils kann die gesamte Wirtschaftlichkeit des Festwalzwerkzeugs erhöht werden.

Wie in dem vorgenannten Stande der Technik gezeigt, ist es üblich, innerhalb eines einzelnen Rollenkäfigs zwei Festwalzrollen zugleich zu führen. Diese Anordnung trifft zu bei Kurbelwellen, entlang derer auf jeden Lagerzapfen jeweils ein Hubzapfen folgt. Bei Kurbelwellen allerdings, bei denen jeweils zwei Hubzapfen unmittelbar nebeneinander liegen, sogenannten Split-Pin-Kurbelwellen, ist es üblich, innerhalb von einem Rollenkäfig auch nur mit einer einzelnen Festwalzrolle zu arbeiten. Auch für diese Anwendungsfälle soll die vorliegende Erfindung geeignet sein. Dementsprechend ist vorgesehen, daß die erste und zweite konkave Ausnehmung auf der ersten und zweiten Stirnseite des prismatischen Körpers in Bezug zu dessen Längsmitte zueinander seitenverkehrt angeordnet sind.

Am äusseren Ende des L-förmigen Werkzeughalters ist der Rollenkäfig jeweils in einer zungenförmigen Verlängerung des Werkzeughalters geführt. Diese zungenförmige Verlängerung greift in eine Längsnut des prismatischen Körpers des Rollenkäfigs ein, so daß das gesamte Festwalzwerkzeug nach unten hin einen planen Abschluss hat, aus dem jeweils nur die nicht geführten Abschnitte der Festwalzrollen hervorragen. Der Eingriff zwischen dem Rollenkäfig und dem L-förmigen Werzeughalter bedingt, daß die Längsnut innerhalb des Rollenkäfigs eine gewisse Abschrägung aufweist. Nachdem im vorliegenden Falle der Rollenkäfig von beiden Stirnseiten her genutzt werden soll, ist dementsprechend vorgesehen, daß die Abschrägung zu beiden Stirnseiten des Rollenkäfigs hin abfallend ausgeführt ist. Mit diesen Mitteln wird eine besonders einfache und wirksame Halterung des Rollenkäfigs bewirkt.

Nachfolgend wird die Erfindung an einem Ausführungsbeispiel näher beschrieben. Es zeigen jeweils in vergrössertem Massstab die
- Fig. 1: eine Vorderansicht eines Rollenkäfigs,
- Fig. 2: einen Schnitt durch den Schenkel eines Rollenkäfigs entlang der Schnittlinie A-A,
- Fig. 3: einen Längsschnitt entlang der Linie C-C der Fig. 1 und
- Fig. 4: einen Schnitt durch den zweiten Schenkel des Rollenkäfigs entlang der Linie B-B.

Der Rollenkäfig 1 hat eine prismatische Grundform mit der rechteckigen Unterseite 2, der gegenüberliegenden Oberseite 3, den seitlichen Höhen 4 und zwei, gegenüberliegenden Stirnseiten 5 und 6. Die Bezifferung der Ober- 3 und Unterseite 2 in der Fig. 1 bezieht sich auf die Einbaulage des Rollenkäfigs 1 im Werkzeug. Auf jeder der Stirnseiten 5 und 6 sind jeweils zwei erste konkave Ausnehmungen 7 und 8 bzw. zweit zweite konkave Ausnehmungen 9 und 13 vorgesehen. Die konkaven Ausnehmungen 7, 8, 9 und 13 dienen zur Führung von Festwalzrollen (nicht gezeigt) auf einem Abschnitt von deren Aussenumfang. Aus der Fig. 2 ist erkennbar, daß die konkave Ausnehmung 7 eine runde Form hat, welche durch die Rundung der Festwalzrolle bedingt ist. Der Ausnehmung 7 auf der Stirnseite 5 entspricht eine Ausnehmung 9 auf der Stirnseite 6, wie das in der Fig. 2 klar erkennbar ist. Die Ausnehmungen 7 und 9 haben jeweils eine identische Form.

Weiterhin ist aus der Fig. 1 erkennbar, daß die beiden Ausnehmungen 7 und 8 jeweils unter einem Winkel 10 zur Längsmitte des prismatischen Rollenkäfigs 1 angeordnet sind, die entlang der Schnittlinie C-C verläuft. Der Ausnehmung 8 entspricht eine weitere, gleichartige Ausnehmung 13 auf der Stirnseite 6 des Rollenkäfigs 1 (Fig. 4).

Auf der Oberseite 3 des prismatischen Grundkörpers des Rollenkäfigs 1 ist eine erste, verbreiterte nutenförmige Ausnehmung 11 vorgesehen. Diese erste nutenförmige Ausnehmung 11 erstreckt sich entlang der Längsmittellinie C-C. In diese erste nutenförmige Ausnehmung 11 greift beispielsweise beim zusammengebauten Werkzeug eine Stützrolle (nicht gezeigt) für die Festwalzrollen (nicht gezeigt) ein. Der ersten nutenförmigen Ausnehmung 11 gegenüberliegend ist auf der Unterseite 2 eine zweite nutenförmige Ausnehmung 12 vorgesehen, welche sich ebenfalls entlang der Längsmittellinie C-C des prismatischen Rollenkäfigs 1 erstreckt. Die nutenförmige Ausnehmung 12 ist zu beiden Stirnseiten 5 und 6 hin abfallend abgeschrägt, wie man das in dem Schnittbild der Fig. 3 gut erkennen kann. Die nutenförmige Ausnehmung 12 dient zur Führung des Rollenkäfigs 1 am äusseren Ende des langen Schenkels eines L-förmigen Werkzeughalters (nicht gezeigt). Die Abschrägungen 14 und 15 der Nut 12 treffen sich ungefähr in der Mitte der Längserstreckung des prismatischen Rollenkäfigs 1.

An dem geschilderten Ausführungsbeispiel ist erkennbar, daß beispielsweise die Längserstreckung 16 des prismatischen Rollenkäfigs 1 geringer ist als dessen Breite 17. Diese Festlegung ist im Hinblick auf die Einbaulage des prismatischen Rollenkäfigs 1 innerhalb des Festwalzwerkzeugs gewählt worden.

### Bezugszeichenliste

- 1: Rollenkäfig
- 2: Unterseite
- 3: Oberseite
- 4: Höhe
- 5: Stirnseite
- 6: Stirnseite
- 7: konkave Ausnehmung
- 8: konkave Ausnehmung
- 9: konkave Ausnehmung
- 10: Winkel
- 11: erste nutenförmige Ausnehmung
- 12: zweite nutenförmige Ausnehmung
- 13: konkave Ausnehmung
- 14: Abschrägung
- 15: Abschrägung
- 16: Längserstreckung
- 17: Breite

## Patentansprüche

1. Rollenkäfig mit einem prismatischen Grundkörper zur Führung von wenigstens einer Festwalzrolle, die zum Festwalzen der Einstiche an Lager- oder Hubzapfen von Kurbelwellen vorgesehen ist, in einer ersten konkaven Ausnehmung auf einer der beiden Stirnseiten des prismatischen Körpers auf einem Abschnitt des Umfangs der Festwalzrolle, wobei die Drehachse der Festwalzrolle unter einem Winkel geneigt ist, in dem der im Rollenkäfig geführte Abschnitt zur Längsmitte des prismatischen Körpers einen geringeren Abstand hat als der übrige Abschnitt, mit einer ersten nutenförmigen Ausnehmung entlang der Längsmitte der Grundfläche des prismatischen Körpers als Durchgang für eine Stützrolle für die Festwalzrolle und einer zweiten nutenförmigen Ausnehmung entlang der Längsmitte auf der der ersten nutenförmigen Ausnehmung gegenüberliegenden Seite des prismatischen Körpers zur Halterung des Rollenkäfigs am Ende des langen Schenkels eines L-förmigen Werkzeughalters, **dadurch gekennzeichnet, daß** auf der der ersten konkaven Ausnehmung (7, 8) gegenüberliegenden zweiten Stirnseite (5 bzw. 6) des prismatischen Körpers (1) wenigstens eine zweite, nach Lage und Grösse mit der ersten konkaven Ausnehmung (7, 8) identische zweite konkave Ausnehmung (9, 13) vorgesehen ist.

2. Rollenkäfig nach Anspruch 1, **dadurch gekennzeichnet, daß** die erste (7, 8) und zweite (9, 13) konkave Ausnehmung auf der ersten (5) und zweiten (6) Stirnseite des prismatischen Körpers (1) in Bezug zu dessen Längsmitte (C-C) zueinander seitenverkehrt angeordnet sind.

3. Rollenkäfig nach Anspruch 1, **dadurch gekennzeichnet, daß** auf der ersten (5) und/oder zweiten (6) Stirnseite des prismatischen Körpers (1) jeweils zwei konkave Ausnehmungen (7, 8, 9, 13) vorgesehen sind.

4. Rollenkäfig nach einem der Ansprüche 1 bis 3, **dadurch gekennzeichnet, daß** die zweite nutenförmige Ausnehmung (12) zu jeder der beiden Stirnseiten (5, 6) des prismatischen Körpers (1) hin eine Abschrägung (14, 15) aufweist.

5. Rollenkäfig nach einem der Ansprüche 1 bis 4, **dadurch gekennzeichnet, daß** der Rollenkäfig (1) aus Bronze besteht.

## Claims

1. A roller cage with a prismatic basic body for guiding at least one deep rolling roller provided for deep rolling the grooves at the bearing journals or crank pins of crankshafts, in a first concave recess on one of the two faces of the prismatic body on one section of the circumference of the deep rolling roller, with the axis of rotation of the deep rolling roller being inclined at an angle at which the section guided within the roller cage has a smaller distance to the longitudinal middle of the prismatic body than the remaining section, with a first groove-shaped recess along the longitudinal middle of the basic area of the prismatic body as a passage for a back-up roller for the deep rolling roller and a second groove-shaped recess along the longitudinal middle on the side of the prismatic body which is opposite the first groove-shaped recess, for holding the roller cage at the extremity of the long limb of an L-shaped tool holder,
**characterised in that** on the second face (5 or 6) of the prismatic body (1) which is opposite the first concave recess (7, 8), at least one second concave recess (9, 13) being identical in position and size to the first concave recess (7, 8), is provided.

2. The roller cage according to claim 1,
**characterised in that** the first (7, 8) and second (9, 13) concave recess on the first (5) and second (6) face of the prismatic body (1) are arranged laterally reversed in respect to each other, in relation to the longitudinal middle (C-C) of said prismatic body.

3. The roller cage according to claim 1,
**characterised in that** on the first (5) and/or second (6) face of the prismatic body (1) two concave recesses each (7, 8, 9, 13) are provided.

4. The roller cage according to one of claims 1 to 3,
**characterised in that** the second groove-shaped recess (12) comprises a bevel (14, 15) to each of the two faces (5, 6) of the prismatic body (1).

5. The roller cage according to one of claims 1 to 4,
**characterised in that** the roller cage (1) is made of bronze.

## Revendications

1. Cage à rouleaux comprenant un corps de base prismatique destiné à guider au moins un rouleau de durcissement par laminage, qui est doté pour le durcissement par laminage d'encoches sur le tourillon de palier ou de levage d'arbres à manivelle, dans un premier évidement concave sur un des deux côtés frontaux du corps prismatique sur une section de la périphérie du rouleau de laminage fixe, l'axe de rotation du rouleau de durcissement par laminage étant incliné selon un angle, dans lequel la section guidée dans la cage à rouleaux présente une distance plus réduite que la section restante par rapport au centre longitudinal du corps prismatique, avec un premier évidement en forme de rainure le long du centre longitudinal de la surface de base du corps prismatique comme passage pour un rouleau d'appui pour le rouleau de durcissement par laminage et un second évidement en forme de rainure le long du centre longitudinal sur le côté du corps prismatique opposé au premier évidement en forme de rainure destiné à fixer la cage à rouleaux à l'extrémité de la branche longue d'un porte-outil en forme de L, **caractérisée en ce qu'**au moins un second évidement concave (9, 13) de longueur et de taille identiques au premier évidement concave (7, 8) est prévu sur le second côté frontal (5 ou 6) du corps prismatique opposé au premier évidement concave (7, 8) est prévu.

2. Cage à rouleaux selon la revendication 1, **caractérisée en ce que** le premier (7, 8) et le second (9, 13) évidements concaves sont disposés sur le premier (5) et le second (6) côtés frontaux du corps prismatique (1) à symétrie spéculaire l'un de l'autre par rapport à leur centre longitudinal (C-C).

3. Cage à rouleaux selon la revendication 1, **caractérisée en ce que** respectivement deux évidements concaves (7, 8, 9, 13) sont prévus sur les premier (5) et/ou second (6) cotés frontaux du corps prismatique (1).

4. Cage à rouleaux selon l'une des revendications 1 à 3, **caractérisée en ce que** le second évidement (12) en forme de rainure comprend un chanfreinage (14, 15) en direction de chacun des deux côtés frontaux (5, 6) du corps prismatique (1).

5. Cage à rouleaux selon l'une des revendications 1 à 4, **caractérisée en ce que** la cage à rouleaux (1) est constituée de bronze.
